(19) Europäisches Patentamt
European Patent Office
Office européen des brevets

(11) **EP 3 833 936 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **19728655.2**

(22) Anmeldetag: **03.06.2019**

(51) Internationale Patentklassifikation (IPC):
**G01P 3/487** (2006.01)   **G01D 5/20** (2006.01)
**G01P 3/42** (2006.01)   **G01D 5/244** (2006.01)
**G01D 18/00** (2006.01)

(52) Gemeinsame Patentklassifikation (CPC):
**G01D 5/204; G01D 5/2046; G01D 5/24457; G01D 18/00; G01P 3/487;** G01D 2205/77

(86) Internationale Anmeldenummer:
**PCT/EP2019/064348**

(87) Internationale Veröffentlichungsnummer:
**WO 2020/030321 (13.02.2020 Gazette 2020/07)**

(54) **SENSORSYSTEM ZUR BESTIMMUNG MINDESTENS EINER ROTATIONSEIGENSCHAFT EINES ROTIERENDEN ELEMENTS**

SENSOR SYSTEM FOR DETERMINING AT LEAST ONE ROTATION CHARACTERISTIC OF A ROTATING ELEMENT

SYSTÈME CAPTEUR POUR DÉTERMINER AU MOINS UNE CARACTÉRISTIQUE DE ROTATION D'UN ÉLÉMENT ROTATIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.08.2018 DE 102018213246**

(43) Veröffentlichungstag der Anmeldung:
**16.06.2021 Patentblatt 2021/24**

(73) Patentinhaber: **Robert Bosch GmbH**
**70442 Stuttgart (DE)**

(72) Erfinder:
• **UTERMOEHLEN, Fabian**
  **59557 Lippstadt (DE)**
• **MERZ, Andreas**
  **71691 Freiberg Am Neckar (DE)**

(56) Entgegenhaltungen:
EP-A1- 2 980 536        WO-A1-2017/195600
DE-B3-102016 202 877

**Beschreibung**

Stand der Technik

Aus dem Stand der Technik sind zahlreiche Sensoren bekannt, welche mindestens eine Rotationseigenschaft rotierender Elemente erfassen. Beispiele derartiger Sensoren sind in Konrad Reif (Hrsg.): Sensoren im Kraftfahrzeug, 2. Auflage, 2012, Seiten 63-74 und 120-129 beschrieben. Beispielsweise kann eine Lage einer Nockenwelle einer Brennkraftmaschine relativ zu einer Kurbelwelle mit einem Phasengeber mittels eines Hall-Sensors bestimmt werden.

Beispielsweise für eine Realisierung einer Traktion in Elektrofahrzeugen werden häufig entweder Asynchronmaschinen oder Synchronmaschinen verwendet, welche jeweils aus einem ortsfesten Stator und einem sich drehenden Rotor bestehen. Der Stator trägt in der Regel drei, beispielsweise um 120°/p zueinander versetzte Wicklungsstränge, wobei p eine Anzahl von Polpaaren repräsentiert. Bei Asynchronmaschinen besteht der Rotor üblicherweise aus an Enden ringförmig kurzgeschlossenen elektrisch leitfähigen Stäben. Bei einer Drehung eines Rotorfeldes kann so in den Stäben eine Spannung induziert werden, welche einen Stromfluss hervorruft, welcher wiederum ein Gegenmagnetfeld aufbaut und es zu einer rotatorischen Bewegung kommt. Die induzierte Spannung ist Null, wenn sich Rotorfeld und Stator gleich schnell drehen. Es stellt sich eine Drehzahldifferenz ein, welche als Schlupf bezeichnet wird und welche das Moment des Motors definiert. Bei Synchronmaschinen umfasst der Rotor einen Läufer, welcher eine Erregerspule trägt, in welchem ein Gleichstrom fließt und ein statisches Magnetfeld erzeugt. Alternativ dazu kann ein Permanentmagnet als Rotor verwendet werden. Es handelt sich dann um eine permanent erregte Synchronmaschine, welche aufgrund der leistungslosen Erregung einen höheren Wirkungsgrad aufweist und so für Traktionsanwendungen geeigneter sein kann. Eine Drehzahl des Rotors kann prinzipbedingt identisch zur Drehzahl eines Erregerfelds sein. Das Drehmoment kann von einem Phasenversatz, also einer Winkeldifferenz zwischen Statorfeld und Rotor, abhängen. Zur Regelung des Moments, Ansteuerung eines Inverters und entsprechender Bereitstellung von Statorspulensignalen muss für Asynchronmaschinen die Drehzahl des Rotors und für Synchronmaschinen eine Absolutwinkelstellung des Rotors bekannt sein.

Um diese Größen zu ermitteln, wird häufig ein so genannter Resolver verwendet. Bei diesem handelt es sich in der Regel um einen elektromagnetischen Messumformer, bei dem ein Rotorpaket drehzahlfest auf der Welle des Motors montiert ist. Kreisringförmig umlaufend sind auf einem Stator eine Erregerspule sowie zwei Empfangsspulen montiert. Die Erregerspule wird mit einem Wechselspannungssignal beaufschlagt und durchsetzt die gesamte Anordnung mit einem elektromagnetischen Wechselfeld. Drehwinkelabhängig wird nun in der ersten Empfangsspule eine sinusförmig amplitudenmodulierte Spannung induziert während in der zweiten Empfangsspule eine cosinusförmig amplitudenmodulierte Spannung induziert wird. Die komplette Bereitstellung des Erregersignals sowie das Auslesen der Signale werden innerhalb der Leistungselektronik oder dedizierten Bausteinen innerhalb des Steuergerätes zur Motorregelung realisiert. Damit ist der Resolver für sich betrachtet eine rein passive Komponente und dadurch per Definition ASIL D fähig (ASIL: Automotive Safety Integrity Level). Bei der ASIL-Fähigkeit, die mit den Buchstaben A bis D klassifiziert wird, handelt es sich um eine quantitative Größe, die angibt, welcher Anteil an ungewollten Betriebszuständen des Sensors erkannt wird, also beispielsweise Kurzschlüsse, Unterbrechungen der Spulen, unplausible Signale oder ähnlichen Betriebszuständen. Der Resolver benötigt allerdings in der Regel relativ viel Bauraum, zieht eine komplexe Signalbereitstellung und Signalaufbereitung nach sich und muss in der Regel mit sehr geringen mechanischen Toleranzen montiert werden, um eine ausreichend hohe Genauigkeit zu erreichen. Aus diesen Gründen sind die Systemkosten entsprechend hoch. Weiterhin ist es in der Regel nicht möglich, aus Platzgründen auf den Stator des Resolvers ein redundantes Empfangsspulensystem zu montieren, um die Verfügbarkeit des Sensors zu erhöhen. Daraus folgt, dass ein Ausfall des Sensors in vielen Fällen zu einem Ausfall des Fahrzeugs führt. Neben elektromagnetischen Resolvern existierten auch optische Resolver, wie beispielsweise in DE 10 2013 203 937 A1 beschrieben, die allerdings neben hohen Kosten in der Regel eine Querempfindlichkeit gegenüber Verschmutzung aufweisen und demzufolge nicht in jedem Umfeld einsetzbar sind.

Alternativ können auch induktive Absolutwinkelsensoren auf Basis gekoppelter Spulen verwendet werden, wie beispielsweise in DE 10 2016 202 877 B3 beschrieben. Dort wird ein Drehwinkelsensor beschrieben, umfassend ein Statorelement mit einer Sendespule und wenigstens zwei innerhalb der Sendespule angeordnete Empfangsspulen, die auf einer Leiterplatte angeordnet sind. Der Drehwinkelsensor umfasst weiterhin ein bezüglich des Statorelements um eine Drehachse drehbar gelagertes Rotorelement, über das die Sendespule mit den wenigstens zwei Empfangsspulen induktiv gekoppelt ist, so dass die induktive Kopplung von einem Drehwinkel zwischen dem Statorelement und dem Rotorelement abhängig ist und die Sendespule in den wenigstens zwei Empfangsspulen wenigstens zwei winkelabhängige Wechselspannungen induziert. Das Rotorelement und die wenigstens zwei Empfangsspulen sind derart ausgebildet, dass in den Empfangsspulen eine Wechselspannung induziert wird, deren Amplitude sinusförmig von dem Drehwinkel abhängig ist. Eine technische Herausforderung besteht in der Regel darin, dass für die Realisierung der Sensorfunktion die Bereitstellung des Erregersignals sowie die Auswertung der Empfangsspulensignale aufgrund der hohen Frequenz häufig nicht mehr im Steuergerät realisiert werden können, so dass es in der Regel eines ASICs bedarf, der direkt auf der Leiterplatte platziert wird, die auch die Spulenstrukturen trägt. Neben der eigentlichen Sensorfunktion muss dieser ASIC in vielen Fällen auch einen hohen Diagnoseanteil realisieren und beispielsweise Nebenschlüsse erkennen sowie die Frequenz/Amplitude des Erregersignals überwachen. Zur Erreichung einer ASIL D Fähigkeit werden häufig zwei ASICs mit mindestens einem separatem Empfangsspulensystem eingesetzt und beide Winkelsignale vom Steuergerät verglichen. Dies erhöht die Kosten der Elektronik sowie der Zuleitungen. Weiterhin stellen so genannte Common-Cause-Fehler eine Herausforderung dar, also systematische Fehler beim ASIC Design, die gleichzeitig bei beiden ASICs auftreten können.

Um eine hohe ASIL Klassifikation zu erreichen und Common-Cause-Fehler auszuschließen, kann auch auf zwei diversitäre Sensorkonzepte gesetzt werden.

Hier ist es beispielsweise üblich magnetfeldbasierte Drehwinkelsensoren zu verwenden. Dazu wird ein Magnet an einem Rotor angebracht, der sich gegenüber einem als ortsfest angenommenen Magnetfeldsensor dreht. Im einfachsten Fall ist der Magnet diametral magnetisiert, weist also zwei entgegengesetzt magnetisierte Bereiche auf, die jeweils gleich große Winkelbereiche, beispielsweise jeweils 180°, umfassen und symmetrisch bezüglich der Drehachse angeordnet sind. Die Messung des Magnetfeldvektors erlaubt leicht einen Rückschluss auf den Drehwinkel. Bekannte Ausführungsformen zur Detektionen des Magnetfeldvektors basieren beispielsweise auf Hallelementen, wie beispielsweise in EP 0 056 303 A2 beschrieben, sowie anderen Prinzipien wie z.B. GMR, TMR oder AMR. Zur Erhöhung des ASIL Levels werden beispielsweise ein GMR- und ein AMR-Sensor auf einer Leiterplatte oder in einem Gehäuse platziert, die beide den Winkel des gemeinsamen Rotormagneten bestimmen. Naturgemäß reagieren jedoch alle absolut messenden Magnetfeldsensoren in der Regel auch auf externe Magnetfelder, die beispielsweise durch einen Stromfluss von benachbart angeordneten Stromkabeln herrühren. Dies ist zum Beispiel bei elektrischen Maschinen für Traktionsanwendungen der Fall, wo Fremdfelder durch den sich drehenden Rotor der häufig eingesetzten permanent erregten Synchronmaschine sowie durch die entsprechenden Zuleitungen der Statorspulen auftreten. Die Winkelfehler hängen von der Stärke des Fremdfeldes und von der Winkelstellung des Sensors ab. Methoden, um Fremdfelder zu unterdrücken umfassen differenzielle Messungen mit mehr als einem Magnetfeldsensor und Nutzung eines mehrpoligen magnetischem Target. Die Winkelgenauigkeit des Sensors reduziert sich dadurch entsprechend. Weiterhin sind derartige Verfahren in der Regel nur bei geringen oder gradientenfreien Störfeldern wirksam. Außerdem weisen nicht alle magnetbasierten Drehwinkelsensoren eine gleich gute Genauigkeit auf. Bei Ausfall eines Sensors steht also mitunter nur ein ungenaueres Signal zur Verfügung.

Offenbarung der Erfindung

Im Rahmen der vorliegenden Erfindung wird daher ein Sensorsystem zur Bestimmung mindestens einer Rotationseigenschaft eines um mindestens eine Rotationsachse rotierenden Elements vorgeschlagen. Unter einem "Sensorsystem" wird im Rahmen der vorliegenden Erfindung grundsätzlich eine beliebige aus einer Mehrzahl von Komponenten bestehende Vorrichtung verstanden, welche geeignet ist, mindestens eine Messgröße zu erfassen, beispielsweise zu messen. Insbesondere kann das Sensorsystem zur Bestimmung der mindestens einen Rotationseigenschaft des rotierenden Elements beispielsweise mindestens ein elektrisches Signal entsprechend der Rotationseigenschaft erzeugen, wie beispielsweise eine Spannung oder einen Strom. Insbesondere kann das Sensorsystem zur Bestimmung der mindestens einen Rotationseigenschaft das mindestens eine elektrische Signal beispielsweise auch auswerten.

Unter einer "Rotationseigenschaft" wird im Rahmen der vorliegenden Erfindung grundsätzlich eine Eigenschaft verstanden werden, welche die Rotation des rotierenden Elements zumindest teilweise beschreibt. Hierbei kann es sich beispielsweise um eine Winkelgeschwindigkeit, eine Drehzahl, eine Winkelbeschleunigung, eine Winkelposition oder eine andere Eigenschaft handeln, welche eine kontinuierliche oder diskontinuierliche, gleichförmige oder ungleichförmige Rotation oder Drehung des rotierenden Elements zumindest teilweise charakterisieren kann. Beispielsweise kann es sich bei der Rotationseigenschaft um eine Position, insbesondere eine Winkelposition oder eine Winkelstellung, eine Drehzahl, eine Winkelbeschleunigung oder um eine Kombination von mindestens zwei dieser Größen handeln. Auch andere Eigenschaften und/oder andere Kombinationen von Eigenschaften können erfassbar sein. Unter einer "Winkelposition" oder einer "Winkelstellung" wird im Rahmen der vorliegenden Erfindung grundsätzlich ein Drehwinkel einer rotationsfähigen Vorrichtung, beispielsweise des rotierenden Elements oder eines Geberrads des Sensorsystems, bezüglich einer senkrecht auf der Rotationsachse stehenden Achse verstanden.

Das Sensorsystem kann insbesondere zum Einsatz in einem Kraftfahrzeug eingerichtet sein. Unter einem "rotierenden Element" wird im Rahmen der vorliegenden Erfindung grundsätzlich ein beliebiges Element verstanden, welches um mindestens eine Achse rotiert. Beispielsweise kann das rotierende Element eine Welle sein, beispielsweise eine Welle in einer Antriebsmaschine, beispielsweise eine Nockenwelle oder eine Kurbelwelle. Beispielsweise kann eine Winkelposition einer Nockenwelle oder eine Drehzahl einer Nockenwelle oder eine Winkelbeschleunigung einer Nockenwelle oder eine Kombination von mindestens zwei dieser Größen bestimmt werden. Auch andere Eigenschaften und/oder andere Kombinationen von Eigenschaften können erfassbar sein.

Das Sensorsystem umfasst mindestens einen Schaltungsträger, ein Geberrad und eine Steuerung. Unter einem "Schaltungsträger" kann eine Vorrichtung verstanden werden, auf welcher mindestens ein elektrisches Bauelement angeordnet werden kann. Der Schaltungsträger kann flexibel ausgestaltet sein. Insbesondere kann der Schaltungsträger ein flexibles Material umfassen. Der Schaltungsträger kann insbesondere ausgewählt sein aus der Gruppe bestehend aus: einer Leiterplatte, insbesondere einer Starrflex-Leiterplatte, beispielsweise einer gebogenen Starrflex-Leiterplatte; einer starren Leiterplatte, insbesondere einer starren Leiterplatte mit Einkerbungen; einer Leiterkarte; einer Platine und einer gedruckten Schaltung, insbesondere einem "printed circuit board" (PCB). Insbesondere kann der Schaltungsträger beispielsweise auch mindestens zwei parallel zueinander angeordnete Flächen, beispielsweise Ebenen, aufweisen. So kann der Schaltungsträger beispielsweise aus einer Mehrzahl von Schichten aufgebaut sein. Insbesondere mehrere Schichten aufweisen.

Der Schaltungsträger des Sensorsystems trägt eine Erregerspule welche mindestens einen Erregerbereich umschließt. Weiterhin trägt der Schaltungsträger in dem Erregerbereich mindestens zwei Empfangsspulen. Jede der Empfangsspulen umschließt jeweils mindestens zwei gegensinnig von der jeweiligen Empfangsspule umschlossene, nicht deckungsgleiche Teilbereiche innerhalb des Erregerbereichs.

Unter einer "Spule" wird im Rahmen der vorliegenden Erfindung grundsätzlich ein beliebiges Bauelement verstanden, welches eine Induktivität aufweist und geeignet ist, bei Stromfluss ein Magnetfeld zu erzeugen und/oder umgekehrt. Beispielsweise kann eine Spule mindestens eine vollständige oder teilweise geschlossene Leiterschleife oder Windung umfassen. Unter einer "Erregerspule" kann im Rahmen der vorliegenden Erfindung grundsätzlich eine Spule verstanden werden, welche bei Anlegen einer elektrischen Spannung und/oder eines elektrischen Stroms einen magnetischen Fluss erzeugt. Die Erregerspule kann mindestens eine Erregerwindung aufweisen. Insbesondere kann unter dem Begriff "Erregerbereich" grundsätzlich ein beliebiger Raum verstanden werden welcher von der Erregerspule umschlossen, beispielsweise begrenzt, wird.

Beispielsweise kann der Erregerbereich durch die Erregerwindung, beispielsweise die mindestens eine Leiterschleife oder Windung der Erregerspule, umschlossen sein.

Die mindestens zwei Empfangsspulen können insbesondere in dem Erregerbereich auf dem Schaltungsträger angeordnet sein. Unter einer "Empfangsspule" wird im Rahmen der vorliegenden Erfindung grundsätzlich eine Spule verstanden, welche eingerichtet ist, aufgrund einer induktiven Kopplung zwischen Erregerspule und Empfangsspule ein Signal zu erzeugen, welches abhängig ist von der induktiven Kopplung. Insbesondere kann die Empfangsspule mindestens eine Empfangswindung aufweisen. Weiterhin kann die Empfangsspule beispielsweise mindestens zwei Teilbereiche umschließen. Unter dem Begriff "Teilbereich" kann grundsätzlich ein beliebiger Raum verstanden werden welcher von mindestens einem Teil der Empfangswindung umschlossen wird. Beispielsweise kann die Empfangsspule mindestens zwei gegensinnig nicht deckungsgleiche Teilbereiche aufweisen. Unter "gegensinnigen Teilbereichen" wird dabei in Rahmen der vorliegenden Erfindung grundsätzlich verstanden, dass die mindestens zwei Teilbereiche der Empfangsspule von mindestens zwei sich in ihrer Orientierung unterscheidenden Teilen der Empfangswindung umschlossen werden. Insbesondere kann dabei der erste Teilbereich von einem im Uhrzeigersinn orientierten ersten Teil der Empfangswindung umschlossen sein, wohingegen der zweite Teilbereich von einem gegen den Uhrzeigersinn orientierten zweiten Teil der Empfangswindung umschlossen sein kann, oder umgekehrt.

Insbesondere weisen die mindestens zwei Empfangsspulen eine im Wesentlichen identische Geometrie auf. Unter dem Begriff "im Wesentlichen identische Geometrie" wird im Rahmen der vorliegenden Erfindung grundsätzlich verstanden, dass sich die Form, insbesondere die Kontur, der beschriebenen Bauelemente ähnelt. Insbesondere kann die Form der im Wesentlichen identischen Geometrie der Bauelemente um einen Wert von 0 % bis 50 %, bevorzugt von 0 % bis 30 %, mehr bevorzugt von 0 % bis 20 %, besonders bevorzugt von 0 % bis 5 % variieren.

Weiterhin sind die mindestens zwei Empfangsspulen relativ zueinander um die Rotationsachse, insbesondere um die Rotationsachse des rotierenden Elements, verdreht angeordnet. Beispielsweise können die mindestens zwei Empfangsspulen um einen Winkel $\xi$ zueinander verdreht angeordnet sein.

Insbesondere kann sich der Winkel $\xi$ der um die Rotationsachse des rotierenden Elements zueinander verdreht angeordneten Empfangsspulen aus einer Anzahl m der Empfangsspulen und einem Messbereich $\beta$ ergeben. Beispielsweise kann der Winkel $\xi$ durch folgende Berechnungsvorschriften ermittelbar sein:

$$\xi = \frac{\beta}{2\,m} \quad \text{für } m = 2 \qquad\qquad (1)$$

und

$$\xi = \frac{\beta}{m} \quad \text{für } m > 2. \qquad\qquad (2)$$

So ergibt sich beispielsweise für zwei Empfangsspulen, insbesondere für m = 2, in Verbindung mit einem beispielhaften Messbereich von β = 360°, der Winkel ξ um den die beiden Empfangsspulen zueinander verdreht angeordnet sind, zu ξ = 90°.

Insbesondere kann beispielsweise der Messbereich β von einer Anzahl n von rechts- und linkslaufenden Teilwindungen abhängig sein. Beispielsweise kann der Messbereich β durch folgende Berechnungsvorschrift ermittelbar sein:

$$\beta = \frac{360°}{n} \quad . \tag{3}$$

Das Sensorsystem weist mindestens ein mit dem um die Rotationsachse rotierenden Element verbundenes Geberrad auf. Unter einem "Geberrad" kann im Rahmen der vorliegenden Erfindung grundsätzlich ein beliebiges mit dem rotierenden Element verbindbares Bauelement verstanden werden, das eingerichtet ist, bei Verbindung mit dem rotierenden Element pro Umdrehung des rotierenden Elements mindestens ein messbares Signal, insbesondere eine Magnetfeldänderung, zu bewirken. Das Geberrad kann beispielsweise permanent oder reversibel mit dem rotierenden Elements verbunden oder verbindbar sein oder kann auch einstückig mit dem rotierenden Element ausgebildet oder in das rotierende Element integriert sein. Insbesondere kann das Geberrad, beispielsweise aus Konstruktionsgründen, auch von einem Element, beispielsweise von einem ein andersartiges Material aufweisendes Element, zumindest teilweise umgeben und/oder mit diesem verbunden sein.

Insbesondere kann das Geberrad beispielsweise zur Vermeidung von asymmetrisch wirkenden Kräften, wie beispielsweise einer Unwucht, zumindest teilweise mit einem Ausgleichselement verbunden sein. So kann das Ausgleichselement beispielsweise mit dem Geberrad verbunden sein und/oder das Geberrad zumindest teilweise umgeben, um eine Asymmetrie, beispielsweise bezüglich der Rotationsachse des rotierenden Elements, auszugleichen. Das Geberrad kann ein Geberradprofil aufweisen. Unter einem "Geberradprofil" kann im Rahmen der vorliegenden Erfindung grundsätzlich eine beliebige Ausformung einer Kontur des Geberrads verstanden werden, insbesondere eine Geometrie, beispielsweise eine äußere Form.

Das Geberrad ist derart asymmetrisch zur Rotationsachse ausgebildet, dass eine Projektion des Geberrads in eine Ebene des Schaltungsträgers in unterschiedlichen Winkelstellungen des rotierenden Elements unterschiedliche Bereiche der Empfangsspulen überdeckt. Insbesondere kann eine Projektion, beispielsweise eine Abbildung eines Umrisses oder einer Kontur, des Geberrads in die Ebene des Schaltungsträgers, beispielsweise in eine parallel zu einer Oberfläche des Schaltungsträgers angeordnete Ebene, in mindestens einer Winkelstellung die jeweils mindestens zwei Teilbereiche der Empfangsspulen ganz oder teilweise überdecken oder abzuschatten. Beispielsweise kann das Geberrad derart ausgebildet sein, dass das Geberrad ein asymmetrisch zur Rotationsachse angeordnetes Kreissegment aufweist. So kann das Geberrad beispielsweise in Form eines Halbkreises ausgebildet sein, wodurch die Projektion des Geberrads in eine Ebene des Schaltungsträgers beispielsweise einen halbkreisförmigen Bereich der Empfangsspulen überdeckt.

Das Sensorsystem umfasst weiterhin mindestens eine Steuerung zur Bestimmung der mindestens einen Rotationseigenschaft aus Signalen der Empfangsspulen. Unter einer "Steuerung" kann dabei allgemein eine elektronische Vorrichtung verstanden sein, welche eingerichtet ist, um von den Empfangsspulen generierte Signale, insbesondere Spannungssignale und/oder Stromsignale, auszuwerten und daraus die mindestens eine Rotationseigenschaft des rotierenden Elements zu bestimmen. Beispielsweise können zur Übertragung der Signale ein oder mehrere elektronische Verbindungen zwischen der Steuerung und den weitere Komponenten des Sensorsystems vorgesehen sein. Die Steuerung kann insbesondere eine Datenverarbeitungsvorrichtung umfassen, beispielsweise mindestens einen Computer oder Mikrocontroller. Die Datenverarbeitungsvorrichtung kann beispielsweise einen oder mehrere flüchtige und/oder nicht flüchtige Datenspeicher aufweisen. Die Steuerung, insbesondere die Datenverarbeitungsvorrichtung, kann beispielsweise programmtechnisch eingerichtet sein, um ein oder mehrere Komponenten des Sensorsystems anzusteuern. Die Steuerung kann beispielsweise weiterhin mindestens eine Schnittstelle umfassen, insbesondere eine elektronische Schnittstelle und/oder eine Mensch-Maschine-Schnittstelle wie beispielsweise eine Eingabe-/AusgabeVorrichtung wie ein Display und/oder eine Tastatur. Die Steuerung kann beispielsweise zentral oder auch dezentral aufgebaut sein. Auch andere Ausgestaltungen sind denkbar.

Weiterhin trägt der Schaltungsträger außerhalb des Erregerbereichs mindestens eine Diagnosespule. Die Diagnosespule umschließt mindestens zwei gegensinnig von der Diagnosespule umschlossene, nicht deckungsgleiche Diagnosebereiche. So kann insbesondere die Diagnosespule mindestens eine Diagnosewindung aufweisen welche teilweise einen ersten Diagnosebereich umschließt und teilweise einen zweiten Diagnosebereich umschließt. Die Diagnosespule ist mit der Steuerung verbunden. Beispielsweise kann die Diagnosespule elektronisch mit der Steuerung verbunden sein, insbesondere zur Übertragung von Signalen der Diagnosespule an die Steuerung.

Unter einer "Diagnosespule" wird im Rahmen der vorliegenden Erfindung grundsätzlich eine beliebig ausgeformte Spule verstanden, welche eingerichtet ist, um mindestens ein Signal zu erzeugen, welches zu einer Auswertung mindestens einer Information geeignet ist. Beispielsweise kann die Diagnosespule das Signal erzeugen zur Auswertung der Diagnoseinformation, beispielsweise einer Funktionsfähigkeit des Sensorsystems, eine Unversehrtheit von Komponenten des Sensorsystems, insbesondere ein Vorhandensein des Geberrads. So kann die Diagnosespule beispielsweise eine Diagnose- und/oder Überwachungsfunktion übernehmen.

Insbesondere kann das Sensorsystem mindestens zwei Diagnosespulen aufweisen. Beispielsweise können mindestens zwei Diagnosespulen insbesondere nicht deckungsgleich zueinander auf dem Schaltungsträger ausgebildet sein. Insbesondere können die Diagnosespulen beispielsweise überlappend angeordnet sein.

Die Diagnosespulen können weiterhin beispielsweise eine im Wesentlichen identische Geometrie aufweisen. Bezüglich des Begriffs "im Wesentlichen identische Geometrie" wird auf die obige Definition verwiesen. Insbesondere kann sich die Form der mindestens zwei Diagnosespulen ähneln.

Weiterhin können die Diagnosespulen um die Rotationsachse gedreht zueinander auf dem Schaltungsträger aufgenommen sein. Insbesondere können die Diagnosespulen beispielsweise in radialer Richtung zueinander verdreht um die Rotationsachse angeordnet sein.

Weiterhin können die Diagnosespulen jeweils im Wesentlichen in Form eines Kreisring-Segments ausgebildet sein. Die Kreisring-Segmente der Diagnosespulen können beispielsweise im Wesentlichen einen identischen Radius aufweisen und konzentrisch um die Rotationsachse angeordnet sein. Insbesondere können die Kreisring-Segmente um die Rotationsachse gegeneinander verdreht sein. So können die Diagnosespulen beispielsweise derart ausgebildet sein, dass sie im Wesentlichen die Form eines Ausschnitts aus einem Kreisring ausbilden. Insbesondere können die derart geformten mindestens zwei Diagnosespulen beispielsweise einen im Wesentlichen identischen Radius aufweisen. Weiterhin kann eine konzentrische Anordnung der Diagnosespulen um die die Rotationsachse möglich sein, insbesondere eine in radialer Richtung gegeneinander verdrehte konzentrische Anordnung der Diagnosespulen.

Die Diagnosespulen können insbesondere in Reihe geschaltet sein. Beispielsweise können die Diagnosespulen derart hintereinander geschaltet sein, dass die elektrische Verbindung der mindestens zwei Diagnosespulen keine Abzweigung aufweist. So können die in Reihe geschalteten Diagnosespulen beispielsweise einen einzigen Strompfad bilden. Insbesondere kann die Steuerung derart eingerichtet sein, um ein Diagnosesignal der in Reihe geschalteten Diagnosespulen auszuwerten.

Insbesondere kann die Projektion des Geberrads in die Ebene des Schaltungsträgers beispielsweise die Diagnosespule zumindest teilweise überdecken, vorzugsweise in jeder Winkelstellung des rotierenden Elements. So kann beispielsweise die Projektion des Geberrads unabhängig von der Winkelstellung, beispielsweise von dem Drehwinkel oder Winkelposition, des rotierenden Elements immer zumindest einen Teil der Diagnosespule überdecken.

Die Steuerung kann beispielsweise mindestens eine erste Teilsteuerung aufweisen. Insbesondere kann die erste Teilsteuerung mit den Empfangsspulen verbunden sein. Weiterhin kann die erste Teilsteuerung insbesondere eingerichtet sein, um die mindestens eine Rotationseigenschaft des rotierenden Elements zu bestimmen. Weiterhin kann die Steuerung beispielsweise mindestens eine zweite Teilsteuerung aufweisen, wobei die zweite Teilsteuerung mit der mindestens einen Diagnosespule verbunden sein kann. Die zweite Teilsteuerung kann insbesondere eingerichtet sein, um mindestens eine Diagnoseinformation zu erzeugen. So kann die erste Teilsteuerung der Steuerung beispielsweise eingerichtet sein, um die zu bestimmende Rotationseigenschaft des rotierenden Elements zu bestimmen, während die zweite Teilsteuerung der Steuerung eingerichtet sein kann, um die mindestens eine Diagnoseinformation zu erzeugen oder zu generieren.

Insbesondere kann die Rotationseigenschaft mindestens eine Information umfassen, ausgewählt aus der Gruppe bestehend aus einer Rotationsgeschwindigkeit und einer Winkelstellung des rotierenden Elements.

Die Diagnoseinformation kann beispielsweise mindestens eine Information umfassen, ausgewählt aus der Gruppe bestehend aus: einem Vorhandensein des Geberrads; einem Nichtvorhandensein des Geberrads; einer korrekten Funktion der ersten Teilsteuerung; einer korrekten Funktion der Erregerspule; einer korrekten Funktion der Empfangsspulen.

Insbesondere können die erste Teilsteuerung und die zweite Teilsteuerung getrennt voneinander ausgebildet sein. Beispielsweise kann die erste Teilsteuerung der Steuerung separat ausgebildet sein von der zweiten Teilsteuerung. So kann die erste Teilsteuerung beispielsweise elektrisch und/oder räumlich getrennt von der zweiten Teilsteuerung ausgeführt sein. Insbesondere kann die erste Teilsteuerung beispielsweise in einem anwendungsspezifischen integrierten Schaltkreis (ASIC) ausgebildet sein. Beispielsweise kann die zweite Teilsteuerung außerhalb des ASIC ausgebildet sein.

Die Steuerung kann eingerichtet sein, um das Diagnosesignal mit mindestens einem Schwellwert zu vergleichen. So kann die Steuerung, insbesondere die zweite Teilsteuerung, beispielsweise eingerichtet sein, um das Diagnosesignal mit mindestens einem Schwellwert zu vergleichen, insbesondere mittels mindestens eines Komparators. Insbesondere kann das Diagnosesignal, beispielsweise in Form einer Spannung oder eines Stroms, mit dem mindestens einen Schwellwert verglichen werden.

Die Steuerung kann dabei eingerichtet sein, um aus dem Vergleich, beispielsweise aus dem Vergleich des Diagnosesignals mit dem mindestens einen Schwellwert, auf das Vorhandensein oder Nichtvorhandensein des Geberrads zu schließen.

Alternativ oder zusätzlich kann die Steuerung auch beispielsweise eingerichtet sein, um aus dem Signal der Diagnosespule auf das Vorhandensein oder Nichtvorhandensein des Geberrads zu schließen. So kann die Steuerung beispielsweise eingerichtet sein, um das Signal der Diagnosespule direkt auszuwerten und so auf das Vorhandensein oder Nichtvorhandensein, insbesondere auf eine Anwesenheit oder eine Abwesenheit des Geberrads zu schließen.

Die Diagnosebereiche können beispielsweise im Wesentlichen Kreisringsegment-förmig ausgebildet sein, mit einem Mittelpunkt der Kreisringsegmente auf der Rotationsachse. Unter "Kreisringsegment-förmig" wird im Rahmen der vorliegenden Erfindung grundsätzlich eine beliebige Ausgestaltung verstanden, welche die Form eines Ausschnitts aus einem Kreisring aufweist. So können die Diagnosebereiche insbesondere derart ausgestaltet sein, dass ihre Geometrie identisch ist zu einer Form eines Kreisringsegments, beispielsweise zu der Form eines Ausschnitts aus einem Kreisring, wobei die Geometrie der Diagnosebereiche um einen Wert von 20 %, bevorzugt von 10 %, besonders bevorzugt von 5 % von der Form des Kreisringsegments abweichen kann. Insbesondere können die Diagnosebereiche derart ausgestaltet sein, dass ein Mittelpunkt der im Wesentlichen Kreisringsegment-förmigen Diagnosebereiche auf der Rotationsachse, insbesondere der Rotationsachse des rotierenden Elements, liegt.

Die Steuerung, insbesondere die zweite Teilsteuerung, kann beispielsweise mindestens einen Gleichrichter zur Gleichrichtung mindestens eines Signals der Diagnosespule aufweisen. Unter einem "Gleichrichter" wird im Rahmen der vorliegenden Erfindung grundsätzlich ein beliebiges Modul zur Umwandlung von wechselförmigen Signalen in gleichförmige Signale verstanden. Der Gelichrichter kann insbesondere eine elektronische Schaltung oder ein elektronisches Modul umfassen, welches eingerichtet ist, um ein Signal, beispielsweise das mindestens eine Signal der Diagnosespule, gleichzurichten, insbesondere von einer wechselförmigen Signalform in eine gleichförmige Signalform umzuwandeln, beispielsweise von einer Wechselspannung in eine Gleichspannung.

Die Steuerung, insbesondere die zweite Teilsteuerung, kann mindestens einen Frequenzfilter zur Filterung mindestens eines Signals der Diagnosespule aufweisen, insbesondere einen vorgeschalteten Frequenzfilter. Unter einem "Frequenzfilter" wird im Rahmen der vorliegenden Erfindung grundsätzlich ein beliebiges Modul zur Umwandlung von Signalen abhängig von deren Frequenz verstanden. Der Frequenzfilter kann insbesondere eine elektronische Schaltung oder ein elektronisches Modul aufweisen, welches eingerichtet ist, um ein Signal, beispielweise das mindestens eine Signal der Diagnosespule, insbesondere eine Amplitude und/oder eine Phasenlage des Signals, abhängig von der Frequenz des Signals zu verändern. Insbesondere können mittels des Frequenzfilters beispielsweise unerwünschte Signalanteile abgeschwächt und/oder unterdrückt werden.

Beispielsweise kann der Frequenzfilter ein RC-Glied aufweisen, beispielsweise eine elektrische Schaltung welche einen ohmschen Widerstand R und einen Kondensator C aufweist. Insbesondere kann der ein RC-Glied aufweisende Frequenzfilter beispielsweise als Hochpassfilter ausgeführt sein. So kann eine Grenzfrequenz $f_g$ des als Hochpassfilter ausgeführten Frequenzfilters beispielsweise durch folgenden Berechnungsvorschrift bestimmbar sein:

$$f_g = \frac{1}{2\pi RC} \quad . \hspace{4cm} (4)$$

Insbesondere kann die Steuerung, insbesondere die zweite Teilsteuerung, beispielsweise sowohl den Gleichrichter als auch den Frequenzfilter aufweisen. So kann beispielsweise die zweite Teilsteuerung eingerichtet sein, um das Signal der Diagnosespule zuerst mittels des Frequenzfilters und anschließend mit Hilfe des Gleichrichters umzuwandeln.

Die Steuerung kann insbesondere eingerichtet sein, um die Erregerspule mit einem periodischen Erregersignal mit einer Erregerfrequenz zu beaufschlagen. So kann die Steuerung beispielsweise eingerichtet sein, um die Erregerspule mit dem periodischen Erregersignal, beispielsweise einem nicht konstanten, aber sich regelmäßig wiederholenden Signal, insbesondere mit einer periodisch variierenden elektrischen Spannung, zu beaufschlagen. Wie oben erläutert, kann die Erregerspule eingerichtet sein, um bei Anlegen eines Signals, beispielsweise einer elektrischen Spannung und/oder eines elektrischen Stroms, einen magnetischen Fluss zu erzeugen. Insbesondere kann der Frequenzfilter beispielsweise eingerichtet sein, um Signale mit der Erregerfrequenz, beispielsweise der Erregerfrequenz mit welcher die Erregerspule beaufschlagt werden kann, passieren zu lassen. So kann der Frequenzfilter zum Beispiel eingerichtet sein, um ein in der Diagnosespule induziertes Signal welches die Erregerfrequenz aufweist passieren lassen.

Die Steuerung, insbesondere die zweite Teilsteuerung, kann eingerichtet sein, um aus dem Signal der Diagnosespule auf eine Drehung des Geberrads zu schließen.

Weiterhin können die Empfangsspulen und/oder die mindestens eine Diagnosespule jeweils Wicklungen in Form einer 8 aufweisen. Insbesondere können die Windungen der Empfangsspulen und/oder der mindestens einen Diagnosespule, beispielsweise die Empfangswindungen und/oder die Diagnosewindung, eine Geometrie einer 8 oder eines Unendlich-Zeichens ∞ aufweisen.

Insbesondere können die Teilbereiche der Empfangsspulen jeweils im Wesentlichen spiegelsymmetrisch zu einer senkrecht zur Rotationsachse durch die Rotationsachse verlaufende Symmetrieachse angeordnet sein, wobei die Symmetrieachsen der Empfangsspulen beispielsweise gegeneinander um die Rotationsachse verdreht sein können.

Das Geberrad kann im Wesentlichen Kreissegment-förmig ausgebildet sein, mit einem Zentrum des Kreissegments auf der Rotationsachse. Beispielsweise kann das Geberrad halbkreisförmig ausgestaltet sein. So kann das Geberrad insbesondere derart ausgebildet und angeordnet sein, dass ein Mittelpunkt des Kreissegments mit der Rotationsachse des rotierenden Elements zusammenfällt. Beispielsweise kann es sich bei dem Zentrum insbesondere um eine Achse oder ein Mittelpunkt handeln von dem aus der Radius, welcher das Kreissegment charakterisiert, gemessen werden kann. Zum Beispiel kann das oben definierte Geberradprofil beispielsweise einen Teilkreis, vorzugsweise einen Halbkreis, aufweisen.

Insbesondere kann eine Projektion des Geberrads in die Ebene des Schaltungsträgers in mindestens einer Winkelstellung des rotierenden Elements die Diagnosespule zumindest teilweise überdecken. Insbesondere kann eine Projektion, beispielsweise eine Abbildung eines Umrisses oder einer Kontur, des Geberrads in die Ebene des Schaltungsträgers in mindestens einer Winkelstellung oder Winkelposition des rotierenden Elements die mindestens eine Diagnosespule zumindest teilweise überdecken oder abschatten.

Weiterhin können die Teilbereiche der Empfangsspulen insbesondere im Wesentlichen spiegelsymmetrisch zu einer Symmetrieachse senkrecht zur Rotationsachse ausgebildet sein.

Alternativ oder zusätzlich können die Teilbereiche, insbesondere die Teilbereiche der Empfangsspulen, weiterhin beispielsweise im Wesentlichen halbkreisförmig ausgestaltet sein. Wohingegen der Erregerbereich, insbesondere der Erregerbereich der Erregerspulen, beispielsweise im Wesentlichen kreisförmig ausgestaltet sein kann.

In einem weiteren Aspekt der vorliegenden Erfindung wird ein Verfahren zur Diagnose eines um mindestens eine Rotationsachse rotierenden Elements vorgeschlagen. Das Verfahren umfasst die folgenden Schritte, bevorzugt in der angegebenen Reihenfolge. Das Verfahren kann, zusätzlich zu den genannten Verfahrensschritten, auch weitere Verfahrensschritte aufweisen. Die Verfahrensschritte sind:

I. Bereitstellung mindestens eines Sensorsystems;

II. Auswertung mindestens eines Diagnosesignals der mindestens einen Diagnosespule, wobei bei der Auswertung mindestens eine Diagnoseinformation gewonnen wird.

Bei dem in Verfahrensschritt I. bereitgestellten Sensorsystem handelt es sich dabei um ein Sensorsystem gemäß der vorliegenden Erfindung, also gemäß einer der oben genannten Ausführungsformen oder gemäß einer der unten noch näher beschriebenen Ausführungsformen des Sensorsystems. Dementsprechend kann für Definitionen und optionale Ausgestaltungen weitgehend auf die Beschreibung des Sensorsystems verwiesen werden. Auch andere Ausgestaltungen sind jedoch grundsätzlich möglich.

Ferner wird im Rahmen der vorliegenden Erfindung ein Computerprogramm vorgeschlagen, das bei Ablauf auf einem Computer oder Computer-Netzwerk das erfindungsgemäße Verfahren in einer seiner Ausgestaltungen ausführt. Weiterhin wird im Rahmen der vorliegenden Erfindung ein Computerprogramm mit Programmcode-Mitteln vorgeschlagen, um das erfindungsgemäße Verfahren in einer seiner Ausgestaltungen durchzuführen, wenn das Programm auf einem Computer oder Computer- Netzwerk ausgeführt wird. Insbesondere können die Programmcode-Mittel auf einem computerlesbaren Datenträger gespeichert sein. Außerdem wird im Rahmen der vorliegenden Erfindung ein Datenträger vorgeschlagen, auf dem eine Datenstruktur gespeichert ist, die nach einem Laden in einen Arbeits- und/oder Hauptspeicher eines Computers oder Computer-Netzwerkes das erfindungsgemäße Verfahren in einer seiner Ausgestaltungen ausführen kann. Auch wird im Rahmen der vorliegenden Erfindung ein Computerprogramm-Produkt mit auf einem maschinenlesbaren Träger gespeicherten Programmcode-Mitteln vorgeschlagen, um das erfindungsgemäße Verfahren in einer seiner Ausgestaltungen durchzuführen, wenn das Programm auf einem Computer oder Computer-Netzwerk ausgeführt wird. Dabei wird unter einem Computer-Programmprodukt das Programm als handelbares Produkt verstanden. Es kann grundsätzlich in beliebiger Form vorliegen, so zum Beispiel auf Papier oder einem computerlesbaren Datenträger und kann insbesondere über ein Datenübertragungsnetz verteilt werden. Schließlich wird im Rahmen der vorliegenden Erfindung ein moduliertes Datensignal vorgeschlagen, welches von einem Computersystem oder Computernetzwerk ausführbare Instruktionen zum Ausführen eines Verfahrens nach einer der beschriebenen Ausführungsformen enthält.

Vorteile der Erfindung

Die vorgeschlagene Vorrichtung und das vorgeschlagene Verfahren weisen gegenüber bekannten Vorrichtungen und Verfahren zahlreiche Vorteile auf. Insbesondere kann ein separates Signal, welches beispielsweise Auskunft über den Zustand des Geberrads, beispielsweise des Targets, und der Maschine gibt bereitgestellt werden. Dabei kann es beispielsweise möglich sein, dass das separate Signal insbesondere Aufklärung oder Informationen darüber liefert, ob sich das rotierende Element, beispielsweise der Rotor einer elektrischen Antriebsmaschine, insbesondere eine Maschine, dreht, vorzugsweise ohne dabei zusätzliche Informationen zu benötigen.

Weiterhin können die vorgeschlagene Vorrichtung und das vorgeschlagene Verfahren beispielsweise im Vergleich zu aus dem Stand der Technik bekannten Vorrichtungen und Verfahren die funktionale Sicherheit erhöhen. Zudem kann beispielsweise auf eine redundante Ausführung verzichtet werden. Insbesondere kann beispielsweise im Gegensatz zu herkömmlichen Vorrichtungen und Verfahren auf weitere, insbesondere mindestens einen zweiten, anwendungsspezifischen integrierten Schaltkreis (ASIC) verzichtet werden. Dadurch können beispielsweise die Systemkosten im Vergleich zu herkömmlichen Vorrichtungen gesenkt werden.

Insbesondere können die vorgeschlagene Vorrichtung und das vorgeschlagene Verfahren elektromagnetisch verträglicher sein als herkömmliche Verfahren und Vorrichtungen. Beispielsweise ist es möglich, dass das in der vorgeschlagenen Vorrichtung und dem vorgeschlagenen Verfahren verwendete Messprinzip beispielsweise keinen Einfluss von Fremdmagnetfeldern, beispielsweise in Folge von hohen Strömen innerhalb von Kabeln, die in Systemnähe angeordnet sind, zeigt. Weiterhin können die vorgeschlagene Vorrichtung und das vorgeschlagene Verfahren beispielsweise im Vergleich zu herkömmlichen Verfahren und Vorrichtungen kostengünstiger sein. Insbesondere werden keine teuren Magnete benötigt. Weiterhin können die vorgeschlagene Vorrichtung und das vorgeschlagene Verfahren beispielsweise vielseitiger einsetzbar sein als herkömmliche Verfahren und Vorrichtungen. Insbesondere können das erfindungsgemäße Sensorsystem und das Verfahren beispielsweise für jegliche Positionierung geeignet sein und nicht auf Rotorlageanwendungen beschränkt sein. Weiterhin können die vorgeschlagene Vorrichtung und das vorgeschlagene Verfahren beispielsweise weniger Bauraum benötigen als bekannte Verfahren und Vorrichtungen.

Insbesondere kann die erfindungsgemäße Vorrichtung beispielsweise eine Erkennung erlauben, ob das Geberrad, beispielsweise ein Target, eines Sensors, beispielsweise eines induktiven Positionssensors, vorhanden ist und ob es sich dreht oder still steht. Dies kann beispielsweise zu einer Erhöhung der funktionalen Sicherheit gegenüber bekannten Vorrichtungen und Verfahren führen. Beispielsweise kann die funktionale Sicherheit zum einen dadurch gesteigert werden, dass in der erfindungsgemäßen Vorrichtung und dem erfindungsgemäßen Verfahren geprüft werden kann, ob sich das Geberrad, beispielsweise das Target, räumlich entfernt hat, beispielsweise von dem rotierenden Element, insbesondere von einer Rotorstruktur, gelöst hat.

Alternativ oder zusätzlich kann die funktionale Sicherheit beispielsweise gesteigert werden, indem mittels der vorgeschlagenen Vorrichtung und des vorgeschlagenen Verfahrens mögliche ASIC Fehler erkannt werden können. Detektiert beispielsweise die erfindungsgemäße Vorrichtung, zum Beispiel die Struktur, insbesondere die Steuerung mit Hilfe des Diagnosesignals, dass sich das Geberrad, beispielsweise das Target, dreht während der ASIC beispielsweise statische Ausgangssignale liefert, kann insbesondere offensichtlich ein ASIC Defekt vorliegen und es können beispielsweise weitere Maßnahmen zur Erhöhung der Sicherheit getroffen werden, insbesondere ein Schalten in einen sicheren Zustand, zu Beispiel ein aktiver Kurzschluss einer elektrischen Maschine und beispielsweise Ausrollen des Fahrzeugs.

Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:

| | |
|---|---|
| Figur 1 | ein Ausführungsbeispiel eines erfindungsgemäßen Sensorsystems in einer Vorderansicht; |
| Figur 2 | ein Ausschnitt aus einem Ausführungsbeispiel eines erfindungsgemäßen Sensorsystems in einer Vorderansicht; |
| Figuren 3A bis C | Ausführungsbeispiele eines erfindungsgemäßen Sensorsystems unterschiedlichen Winkelstellungen des Geberrads in Vorderansicht; |
| Figur 4 | einen Ausschnitt aus einer Steuerung eines erfindungsgemäßen Sensorsystems; |
| Figur 5 | Ausführungsbeispiel einer Signalform des erfindungsgemäßen Sensorsystems; |
| Figur 6 | ein Ausführungsbeispiel eines erfindungsgemäßen Sensorsystems; |
| Figur 7 | ein Ausführungsbeispiel einer Signalform des Sensorsystems; und |
| Figur 8 | ein Ausführungsbeispiel eines erfindungsgemäßen Verfahrens. |

Ausführungsformen der Erfindung

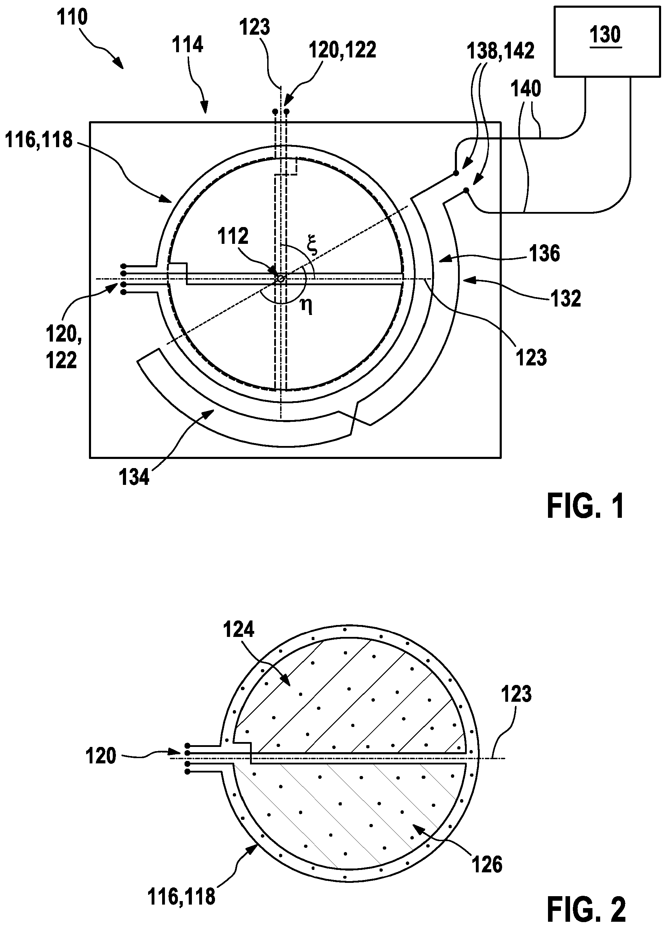

In Figur 1 ist ein Ausführungsbeispiel eines Sensorsystems 110 zur Bestimmung mindestens einer Rotationseigenschaft eines um mindestens eine Rotationsachse 112 rotierenden Elements gezeigt. Das Sensorsystem 110 kann insbesondere zum Einsatz in einem Kraftfahrzeug, beispielsweise in einem Antriebssystem, eingerichtet sein. Insbesondere kann das Sensorsystem 110 zur Erfassung mindestens einer Rotationseigenschaft eines Rotors eingerichtet sein. Beispielsweise kann das Sensorsystem 110 eingerichtet sein, eine Winkelposition eine Drehzahl oder eine Drehrichtung des Rotors zu erfassen. Dementsprechend kann es sich bei dem rotierenden Element beispielsweise um eine Welle, insbesondere um eine mit dem Rotor verbundene Welle, handeln. Das Sensorsystem 110 umfasst mindestens einen Schaltungsträger 114. Der Schaltungsträger 114 trägt eine Erregerspule 116, wobei die Erregerspule 116 mindestens einen Erregerbereich 118 umschließt. Der Schaltungsträger 114 trägt in dem Erregerbereich 118 weiterhin mindestens zwei Empfangsspulen 120, wobei jede der Empfangsspulen 120 jeweils mindestens zwei gegensinnig von der jeweiligen Empfangsspule 120 umschlossene, nicht deckungsgleiche Teilbereiche 122 innerhalb des Erregerbereichs 118 umschließen. Insbesondere können die Teilbereiche 122 der Empfangsspulen 120 jeweils im Wesentlichen spiegelsymmetrisch zu einer senkrecht zur Rotationsachse 112 durch die Rotationsachse 112 verlaufende Symmetrieachse 123 angeordnet sein, wobei die Symmetrieachsen 123 der Empfangsspulen 120 beispielsweise gegeneinander um die Rotationsachse 112 verdreht sein können.

Insbesondere kann beispielsweise auf dem Schaltungsträger 114, insbesondere einer Leiterplatte, beispielsweise einer Sensorleiterplatte, die Erregerspule 116, beispielsweise eine Sendespule, angeordnet sein, beispielsweise integriert. Die Erregerspule 116 kann, beispielsweise um eine Erhöhung der Induktivität insbesondere zu bewirken, mit mehreren Windungen in einer oder mehreren Ebenen des Schaltungsträgers 114, beispielsweise der Sensorleiterplatte, ausgestaltet sein, insbesondere realisiert sein. Insbesondere kann die Erregerspule 116 beispielsweise ein frequenzbestimmendes Element eines LC Oszillators sein, dessen Resonanzfrequenz beispielsweise durch Auslegung der Erregerspule 116 und/oder beispielsweise mittels Kondensatoren (nicht dargestellt), insbesondere durch eine Bestückung mit Kondensatoren, derart eingestellt, insbesondere gewählt, werden kann, dass die Resonanzfrequenz beispielsweise in einem Bereich liegt von 0,5 MHz bis 10 MHz, insbesondere von 1 MHz bis 7 MHz, vorzugsweise von 1,5 MHz bis 5 MHz, besonders bevorzugt von 2,5 MHz bis 4,5 MHz. Beispielsweise kann ein Erregersignal, beispielsweise eine erregende Spannung, insbesondere die Spannung mit der die Erregerspule 116 beispielsweise beaufschlagt werden kann, derart eingestellt sein, dass sie Amplituden aufweist in einem Bereich von 0,1 V bis 20 V, beispielsweise von 0,5 V bis 15 V, insbesondere von 0,7 V bis 12 V, vorzugsweise von 1 V bis 10 V. Insbesondere kann durch einen Stromfluss in der Erregerspule 116 ein elektromagnetisches Wechselfeld entstehen, welches beispielsweise induktiv in die mindestens zwei Empfangsspulen 120 koppelt.

Zur besseren Übersicht, sind in dem in Figur 2 gezeigten Ausschnitt aus einem Ausführungsbeispiel eines Sensorsystems 110 nur die Erregerspule 116 und eine der mindestens zwei Empfangsspulen 120 illustriert. Wie dargestellt, sind beispielsweise sowohl der erste Teilbereich 124 als auch der zweite Teilbereich 126 der Empfangsspule 120 innerhalb des Erregerbereichs 118 angeordnet.

Beispielsweise können die rechts- und linkslaufenden Teilbereiche 122, beispielsweise die Teilwindungen, insbesondere der Empfangsspulen 120, vorzugsweise dafür sorgen, dass zum Beispiel homogene magnetische Störfelder, insbesondere deren Einfluss auf die induzierten Spannungen und/oder Ströme in den Empfangsspulen 120, unterdrückt werden. Dies kann beispielsweise daran liegen, dass Störfelder in den Teilwindungen Spannungen unterschiedlichen Vorzeichens induzieren, die sich durch die Reihenschaltung der Empfangsspulen 120 gegenseitig auslöschen, beispielsweise zu Null addieren.

Die Empfangsspulen 120 weisen eine im Wesentlichen identische Geometrie auf, wobei die Empfangsspulen 120 relativ zueinander um die Rotationsachse 112 verdreht angeordnet sind. Insbesondere können die Empfangsspulen 120, wie in Figur 1 illustriert, um einen Winkel ξ um die Rotationsachse 112 verdreht zueinander angeordnet sein.

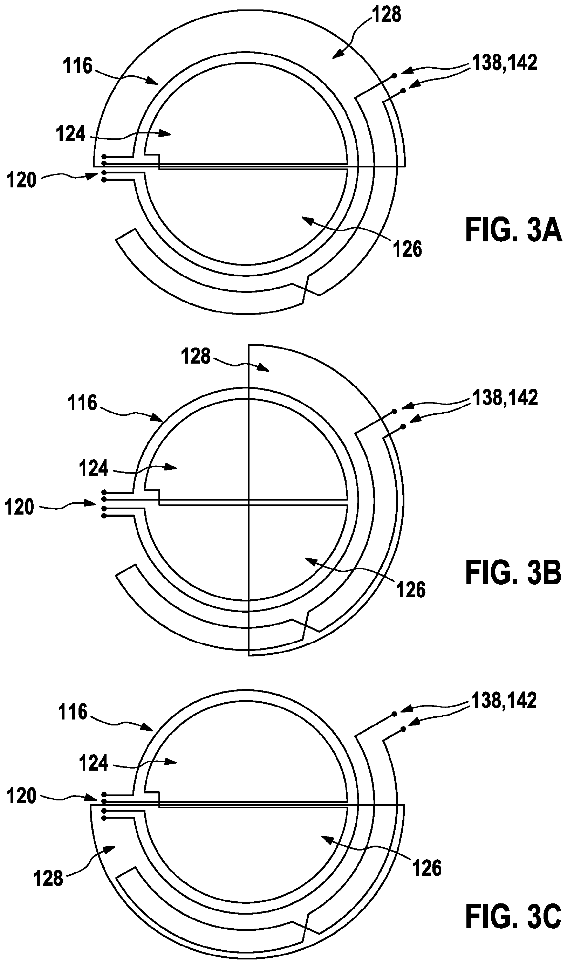

Das Sensorsystem 110 weist weiterhin mindestens ein mit dem um die Rotationsachse 112 rotierenden Element verbundenes Geberrad 128 auf, welches in den Figuren 3A bis C dargestellt ist. In Figur 1 wurde aus Übersichtsgründen auf die Darstellung des Geberrads 128 verzichtet.

Das Sensorsystem 110 weist weiterhin mindestens eine Steuerung 130 zur Bestimmung der mindestens einen Rotationseigenschaft aus Signalen der Empfangsspulen 120 auf. Weiterhin weißt das Sensorsystem 110 außerhalb des Erregerbereichs 118 mindestens eine Diagnosespule 132 auf, wobei die Diagnosespule 132 mindestens zwei gegensinnig von der Diagnosespule 132 umschlossene, nicht deckungsgleiche Diagnosebereiche 134, 136 umschließt.

Die Diagnosespule 132 kann dabei insbesondere, wie in Figur 1 gezeigt, einen Winkel η um die Rotationsachse 112 abdecken. Die Diagnosespule 132 ist mit der Steuerung 130 verbunden. Beispielsweise können Anschlüsse 138 der Diagnosespule 132, wie in Figur 1 illustriert, über Kabel 140 mit der Steuerung 130 verbunden sein. Andere Verbindungsarten sind ebenfalls möglich.

Das Geberrad 128 ist derart asymmetrisch zur Rotationsachse 112 ausgebildet, dass eine Projektion des Geberrads 128 in eine Ebene des Schaltungsträgers 114 in unterschiedlichen Winkelstellungen des rotierenden Elements unterschiedliche Bereiche der Empfangsspulen 120 überdeckt, wie insbesondere in den Figuren 3A bis C gezeigt ist.

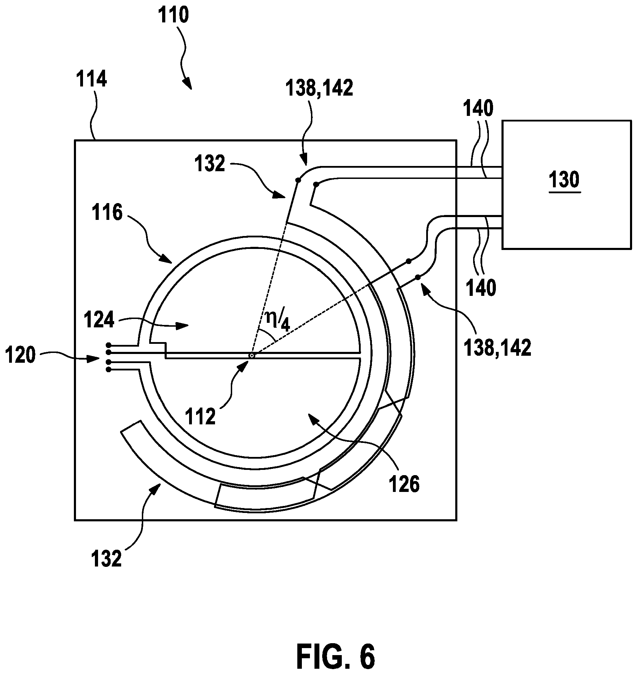

Zur Einfachheit der Darstellung wurde in den Figuren 3A bis C sowie in Figur 6 auf die Illustration der zweiten der mindestens zwei Empfangsspulen 120 des Sensorsystems 110 verzichtet.

In Figur 3A ist das Geberrad 128 beispielhaft in einer ersten Winkelstellung gezeigt. Das Geberrad 128 deckt hierbei den ersten Teilbereich 124 der dargestellten Empfangsspule 120 vollständig ab, wohingegen der zweite Teilbereich 126 der dargestellten Empfangsspule 120 freigelassen wird. Insbesondere kann in dieser ersten Winkelstellung beispielsweise ein Betrag des Signals, welches durch die Erregerspule 116 in der gezeigten Empfangsspule 120 induziert wird, ein Maximum einnehmen, beispielsweise ein maximal positives Signal aufweisen, insbesondere eine maximal positive Spannung zeigen.

In Figur 3B ist das Geberrad 128 beispielhaft in einer zweiten Winkelstellung gezeigt. Das Geberrad 128 deckt hierbei jeweils gleich große Teile des ersten Teilbereichs 124 und des zweiten Teilbereichs 126 der dargestellten Empfangsspule 120 ab. Insbesondere können in dieser zweiten Winkelstellung die in der Empfangsspule 120 induzierten Signale, beispielsweise die induzierten Spannungen, Null sein. So können sich in der zweiten Winkelstellung insbesondere die im ersten Teilbereich 124 induzierten Signale und die im zweiten Teilbereich 126 induzierten Signale, beispielsweise Spannungen, genau aufheben, insbesondere derart überlagern, dass ihre Summe Null ergibt.

In Figur 3C ist das Geberrad 128 beispielhaft in einer dritten Winkelstellung gezeigt. Das Geberrad 128 deckt hierbei den zweiten Teilbereich 126 der dargestellten Empfangsspule 120 vollständig ab, wohingegen der erste Teilbereich 124 der dargestellten Empfangsspule 120 freigelassen wird. Insbesondere kann in dieser dritten Winkelstellung, ähnlich wie in der in Figur 3A gezeigten ersten Winkelstellung, der Betrag des Signals der Empfangsspule 120 ein Maximum einnehmen, wobei insbesondere das Vorzeichen getauscht sein kann. Beispielsweise kann das in der dritten Winkelstellung in der Empfangsspule 120 induzierte Signal, insbesondere die induzierte Spannung, ein maximal negatives Signal aufweisen. Insbesondere können in den beiden in den Figuren 3A und 3C illustrierten Winkelstellungen des Geberrads 128 die beiden maximalen Beträge, insbesondere Maximum und Minimum, der Signale in der dargestellten Empfangsspule 120 induziert werden.

Insbesondere ist in den Figuren 3A bis C weiterhin die mindestens eine Diagnosespule 132 dargestellt. Beispielsweise kann die Diagnosespule 132 insbesondere eingerichtet sein, um das Vorhandensein, beispielsweise eine Präsenz, des Geberrads 128 und/oder beispielsweise eine Drehung des Geberrads 128 zu ermitteln, beispielsweise zu diagnostizieren. Insbesondere kann der Winkel $\eta$ der Diagnosespule 132, beispielweise ein Öffnungswinkel der Diagnosespule132, vorzugsweise mindestens so groß sein wie der halbe Messbereich $\beta$. In der hier dargestellten Ausführungsform des Sensorsystems 110 kann beispielsweise der Messbereich $\beta = 360°$ betragen und der Winkel $\eta$ der Diagnosespule 132 $\eta = 180°$ betragen. So kann beispielsweise bevorzugt der Winkel $\eta$ der Diagnosespule 132 halb so groß sein wie der Messbereich $\beta$. Weiterhin kann der Winkel $\eta$ der Diagnosespule 132 beispielsweise zu einem Öffnungswinkel des Geberrads 128 im Wesentlichen identisch sein. So kann beispielsweise die Diagnosespule 132 immer, insbesondere in jeder beliebigen Winkelstellung des Geberrads 128, zumindest teilweise von dem Geberrad 128, insbesondere von dem Target, überdeckt oder überlagert, beispielsweise abgeschattet, sein.

Wie in Figuren 3A bis C gezeigt, kann ein Außendurchmesser oder Außenradius der Geometrie des Geberrads 128 vorzugsweise derart gewählt sein, dass in mindestens einer Winkelstellung oder Winkelposition des Geberrads 128 die mindestens eine Diagnosespule 132 in radiale Richtung ausgehend von der Rotationsachse 112 vollständig überdeckt ist. Beispielsweise kann die Diagnosespule 132 analog zu den Empfangsspulen 120 aufgebaut sein, insbesondere um äußere Einflüsse, beispielsweise Fremdfeldeinflüsse, auf das Sensorsystem 110 zu minimieren, insbesondere zu unterdrücken. Insbesondere kann der erste Diagnosebereich 134 und der zweite Diagnosebereich 136 der Diagnosespule 132 beispielsweise jeweils aus einer rechts- oder linkslaufenden Teilwindung der Diagnosespule 132 gebildet sein. So kann zum Beispiel die rechtslaufende Teilwindung eine gleiche Fläche aufspannen wie die linkslaufende Teilwindung. Die Signale der mindestens einen Diagnosespule 132, insbesondere die Diagnosesignale 142, können beispielsweise an den Anschlüssen 138 abgegriffen werden.

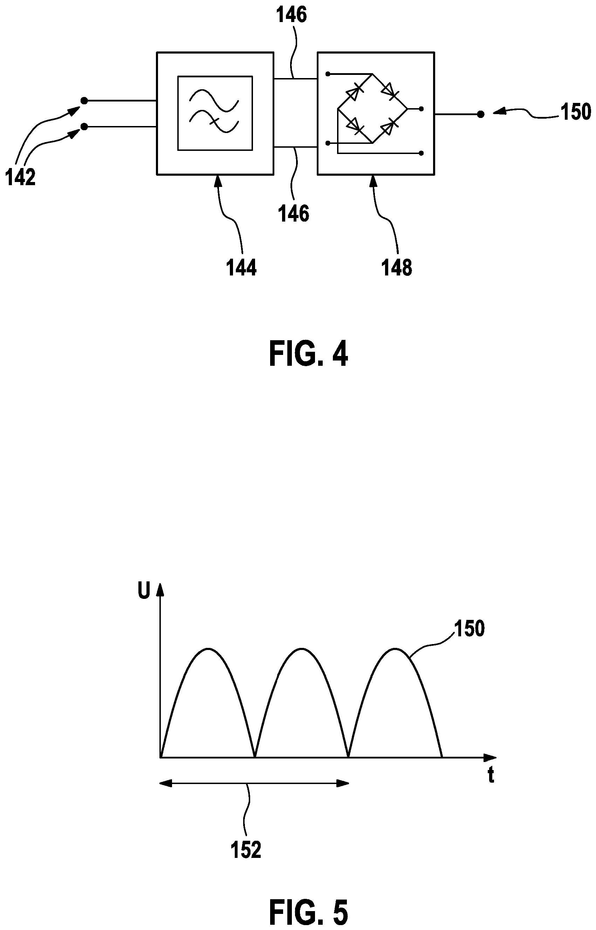

In dem in Figur 4 gezeigten Ausschnitt aus der Steuerung 130 des Sensorsystems 110 ist beispielhaft eine Verarbeitung der Diagnosesignale 142 dargestellt. Insbesondere können die Diagnosesignale 142 beispielsweise zuerst mit Hilfe eines Frequenzfilters 144 gefiltert werden. Insbesondere können die Diagnosesignale 142 mittels des Frequenzfilters 144 beispielsweise von Signal-Bestandteilen bereinigt werden, welche sich nicht für die Auswertung der Signale eignen, wie beispielsweise von sogenanntem Rauschen. Im Anschluss können die Signale 146, insbesondere die frequenzgefilterten Diagnosesignale 142, beispielsweise durch einen Gleichrichter 148 gleichgerichtet werden. Insbesondere können wechselförmige Signale 146 wie beispielsweise Wechselspannungen mittels des Gleichrichters 148 in gleichförmige Signale, wie beispielsweise Gleichspannungen, umgewandelt werden. Auch andere Bearbeitungen der Diagnosesignale 142 sind möglich. Insbesondere ist eine umgekehrte Bearbeitungsreihenfolge der Diagnosesignale 142 durch den Frequenzfilter 144 und den Gleichrichter 148 ebenfalls denkbar. Zudem kann die Verarbeitung der Diagnosesignale 142 eine beliebige Anzahl weiterer Elemente oder Bearbeitungs-Module aufweisen, wie beispielsweise hier nicht dargestellte Glättungskondensatoren.

Figur 5 zeigt einen beispielhaften Verlauf eines verarbeiteten Signals 150. Insbesondere ist ein zeitlicher Verlauf des verarbeiteten Signals 150 dargestellt, wobei die Zeit t auf der horizontalen Achse aufgetragen ist und die Signalstärke, beispielsweise die Spannung U, auf der vertikalen Achse aufgetragen ist. Beispielsweise kann sich eine vollständige Umdrehung 152 des Geberrads 128 in dem Verlauf des Signals 150, beispielsweise in der Signalform, insbesondere durch zwei Ausschläge widerspiegeln. Insbesondere kann sich die hier dargestellte Signalform beispielsweise bei gleichförmiger Drehung des Geberrads 128, insbesondere bei gleichförmiger Drehung des Targets, ergeben. Beispielsweise kann das Signal 150 alle halbe Umdrehung des Geberrads 128 ein Minimum 154 erreichen. Insbesondere kann beispielsweise aus einem zeitlichen Abstand der Minima 154 eine Drehzahl des rotierenden Elements bestimmt werden und somit beispielsweise auf eine Drehzahl des Rotors zurückgeschlossen werden. Zur Bestimmung der Drehzahl kann das Sensorsystem 110, insbesondere die Steuerung 130, beispielsweise einen hier nicht dargestellten Komparator umfassen, wobei beispielsweise mittels des Komparators beispielsweise das Diagnosesignal 142, insbesondere das verarbeitet Signal 150, mit einem Schwellwert verglichen werden kann. So kann beispielsweise eine mit dem Komparator oder einer anderen geeigneten Einrichtung, bestimmte Drehzahl mit einer vorgegebenen Solldrehzahl verglichen werden.

Ohne Geberrad 128, insbesondere ohne Target, kann das induzierte Signal in der Diagnosespule 132, das vorzugsweise über die Anschlüsse 138 abgegriffen werden kann, beispielsweise dauerhaft Null betragen, bei einer Spannung beispielsweise 0 Volt. So kann beispielsweise ein dauerhaft ausbleibendes Signal, beispielsweise ein dauerhaft Null betragendes Signal, in einem Fall, in dem davon ausgegangen werden kann, dass der Rotor sich dreht, beispielsweise in dem Fall in dem die E-Maschine mit Strom versorgt wird, bedeuten dass sich das Geberrad 128, insbesondere das Target, beispielsweise vom Rotor gelöst oder entfernt hat.

Weiterhin kann beispielsweise bei einem Vorliegen einer Signalform des Signals 150 wie in Figur 5 dargestellt, in einem Fall in dem zum Beispiel zeitgleich ein unverändertes Ausgangssignal des ASICs vorliegt, davon ausgegangen werden, dass eine Komponente fehlebehaftet ist, insbesondere der ASIC beispielsweise nicht vollständig funktionsfähig ist.

Ferner kann es beispielsweise möglich sein aus einem Maximalbetrag des Signals 150, insbesondere aus einer Signalhöhe in einem Maximum des Signals 150, auf einen Abstand zwischen dem Geberrad 128 und den Spulen, beispielsweise der Erregerspule 116, der Empfangsspulen 120 und der mindestens einen Diagnosespule 132, zu schließen. Insbesondere kann sich hierbei beispielsweise ein antiproportionaler Zusammenhang zwischen Abstand und Signalhöhe ergeben.

Auch andere als die in Figur 5 gezeigte Signalform des Signals 150 sind möglich. So kann die Signalform des Signals 150 beispielsweise auch Sägezahn-förmig, parabel- oder sinusförmig sein. Insbesondere kann die Signalform des Signals 150 beispielsweise von einer genauen Ausgestaltung der mindestens einen Diagnosespule 132 beeinflussbar sein.

In Figur 6 ist ein weiteres Ausführungsbeispiel eines Sensorsystems 110 illustriert. Insbesondere kann das Sensorsystem 110 auch zwei Diagnosespulen 132 aufweisen. Die Diagnosespulen 132 können dabei bevorzugt nicht deckungsgleich zueinander auf dem Schaltungsträger 114 ausgebildet sein und eine im Wesentlichen identische Geometrie aufweisen. Die Diagnosespulen 132 können beispielsweise um die Rotationsachse 112 gedreht zueinander auf dem Schaltungsträger 114 aufgenommen sein. Vorzugsweise können die beiden Diagnosespulen 132 um einen Winkel von $\eta/4$ zueinander verdreht angeordnet sein. Insbesondere können die beiden Diagnosespulen 132 auch in Reihe geschaltet sein, wobei beispielsweise die Steuerung 130 eingerichtet sein kann, um die Diagnosesignale 142 der beiden in Reihe geschalteten Diagnosespulen 132 auszuwerten. Insbesondere können die Anschlüsse 138 der beiden Diagnosespulen 132 beispielsweise mit Kabeln verbunden sein.

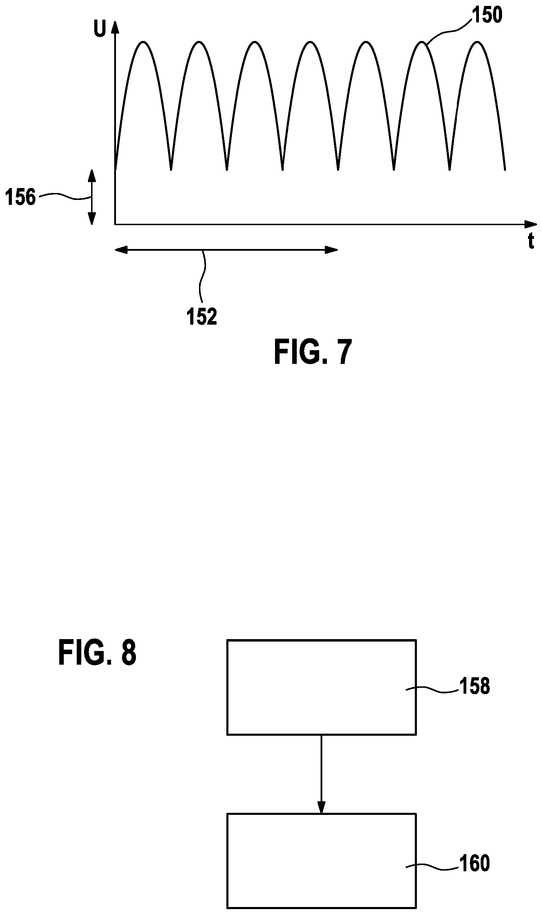

Eine Ausführungsform einer Signalform der in Reihe geschalteten Diagnosespulen 132 ist beispielsweise in Figur 7 gezeigt. Insbesondere ist ein zeitlicher Verlauf des verarbeiteten Signals 150 der beiden in Reihe geschalteten Diagnosespulen 132 dargestellt, wobei die Zeit t auf der horizontalen Achse aufgetragen ist und die Signalstärke, beispielsweise die Spannung U, auf der vertikalen Achse aufgetragen ist. Beispielsweise kann sich eine vollständige Umdrehung 152 des Geberrads 128 in dem Verlauf des sich aus den beiden in Reihe geschalteten Diagnosespulen 132 ergebenden Signals 150, beispielsweise in der Signalform, insbesondere durch vier Ausschläge widerspiegeln. Insbesondere kann sich die hier dargestellte Signalform beispielsweise bei gleichförmiger Drehung des Geberrads 128, insbesondere bei gleichförmiger Drehung des Targets, ergeben. Weiterhin kann die in Figur 7 gezeigte Signalform der in Reihe geschalteten Diagnosespulen 132 beispielsweise einen Offset 156, insbesondere eine dauerhaft vorhandene Signalstärke, aufweisen. So kann die Steuerung 130 beispielsweise eingerichtet sein zu beliebiger Zeit ein Vorhandensein des Geberrads 128 zu überprüfen. Beispielsweise kann ein hier nicht dargestellter Komparator der Steuerung 130 insbesondere eine Schaltschwelle unterhalb des Offsets 156 aufweisen. So kann beispielsweise ein Nichtvorhandensein des Geberrads 128 zu jeder Zeit festgestellt werden.

Insbesondere kann das in Figur 6 gezeigte Ausführungsbeispiel des Sensorsystems 110 beispielsweise eine true-power-on Funktionalität aufweisen, insbesondere es ermöglichen die Position des Geberrads 128 und somit beispielsweise auch eine Position des rotierenden Elements zu bestimmen, ohne, dass eine Drehung des Geberrads 128, insbesondere des Targets, notwendig ist. Insbesondere kann beispielsweise die Steuerung, insbesondere in dem in Figur 6 illustrierten Ausführungsbeispiel, zum Beispiel ein Vorhandensein des Geberrads 128 von einem Nichtvorhandensein des Geberrads 128 in jeder Winkelstellung des Geberrads 128 anhand der Diagnosesignale 142, insbesondere anhand des Offsets 156, unterscheiden.

Weiterhin können beispielsweise pro vollständiger Umdrehung 152 des Geberrads 128 vier Ausschläge des Signals 150 aus den in Reihe geschalteten Diagnosespulen 132 auftreten. So kann insbesondere eine Auflösung der Drehzahlmessung erhöht werden. Beispielsweise kann in dem in Figur 6 dargestellten Ausführungsbeispiel des Sensorsystems 110 beispielsweise nach einer viertel Umdrehung des Geberrads 128 zum Beispiel die Drehzahl gemessen werden.

Weiterhin können die Diagnosespulen 132 beispielsweise die Erregerspule 116, insbesondere die Sendespule, und die Empfangsspulen 120 auch komplett umlaufen. Insbesondere kann der Winkel η der Diagnosespulen 132 beispielsweise η=360° betragen. Dabei kann beispielsweise die Form der Diagnosespulen 132, insbesondere die links- und rechtslaufenden Teilwindungen, beispielsweise die Struktur der Diagnosespulen 132, periodisch fortgesetzt werden. So kann eine Diagnosespule 132 mit einem Winkel η=360°, beispielsweise vier Diagnosebereiche 134, 136 aufweisen.

In Figur 8 ist ein Flussdiagramm eines Ausführungsbeispiels eines Verfahrens zur Diagnose eines um mindestens eine Rotationsachse 112 rotierenden Elements gezeigt. Das Verfahren umfasst die folgenden Schritte:

I. (gekennzeichnet mit Bezugszeichen 158) Bereitstellung mindestens eines Sensorsystems 110;

II. (gekennzeichnet mit Bezugszeichen 160) Auswertung mindestens eines Diagnosesignals 142 der mindestens einen Diagnosespule 132, wobei bei der Auswertung mindestens eine Diagnoseinformation gewonnen wird.

**Patentansprüche**

1. Sensorsystem (110) zur Bestimmung mindestens einer Rotationseigenschaft eines um mindestens eine Rotationsachse (112) rotierenden Elements, umfassend mindestens einen Schaltungsträger (114), wobei der Schaltungsträger (114) eine Erregerspule (116) trägt, wobei die Erregerspule (116) mindestens einen Erregerbereich (118) umschließt, wobei der Schaltungsträger (114) in dem Erregerbereich (118) weiterhin mindestens zwei Empfangsspulen (120) trägt, wobei jede der Empfangsspulen (120) jeweils mindestens zwei gegensinnig von der jeweiligen Empfangsspule (120) umschlossene, nicht deckungsgleiche Teilbereiche (124, 126) innerhalb des Erregerbereichs (118) umschließen, wobei die Empfangsspulen (120) eine im Wesentlichen identische Geometrie aufweisen, wobei die Empfangsspulen (120) relativ zueinander um die Rotationsachse (112) verdreht angeordnet sind, wobei das Sensorsystem (110) weiterhin mindestens ein mit dem um die Rotationsachse (112) rotierenden Element verbundenes Geberrad (128) aufweist, wobei das Geberrad (128) derart asymmetrisch zur Rotationsachse (112) ausgebildet ist, dass eine Projektion des Geberrads (128) in eine Ebene des Schaltungsträgers (114) in unterschiedlichen Winkelstellungen des rotierenden Elements unterschiedliche Bereiche der Empfangsspulen (120) überdeckt, wobei das Sensorsystem (110) weiterhin mindestens eine Steuerung (130) zur Bestimmung der mindestens einen Rotationseigenschaft aus Signalen der Empfangsspulen (120) aufweist,
**dadurch gekennzeichnet, dass**
der Schaltungsträger (114) weiterhin außerhalb des Erregerbereichs (118) mindestens eine Diagnosespule (132) trägt, wobei die Diagnosespule (132) mindestens zwei gegensinnig von der Diagnosespule (132) umschlossene, nicht deckungsgleiche Diagnosebereiche (134, 136) umschließt und wobei die Diagnosespule (132) mit der Steuerung (130) verbunden ist.

2. Sensorsystem (110) nach dem vorhergehenden Anspruch, wobei das Sensorsystem (110) mindestens zwei Diagnosespulen (132) aufweist.

3. Sensorsystem (110) nach dem vorhergehenden Anspruch, wobei die Diagnosespulen (132) eine im Wesentlichen identische Geometrie aufweisen, wobei die Diagnosespulen (132) um die Rotationsachse (112) gedreht zueinander auf dem Schaltungsträger (114) aufgenommen sind.

4. Sensorsystem (110) nach einem der zwei vorhergehenden Ansprüche, wobei die Diagnosespulen (132) in Reihe geschaltet sind, wobei die Steuerung (130) eingerichtet ist, um ein Diagnosesignal (142) der in Reihe geschalteten Diagnosespulen (132) auszuwerten.

5. Sensorsystem (110) nach einem der vorhergehenden Ansprüche, wobei die Projektion des Geberrads (128) in die Ebene des Schaltungsträgers (114) die Diagnosespule (132) zumindest teilweise überdeckt.

6. Sensorsystem (110) nach einem der vorhergehenden Ansprüche, wobei die Steuerung (130) mindestens eine erste Teilsteuerung aufweist, wobei die erste Teilsteuerung mit den Empfangsspulen (120) verbunden ist und eingerichtet ist, um die mindestens eine Rotationseigenschaft des rotierenden Elements zu bestimmen, wobei die Steuerung (130) weiterhin mindestens eine zweite Teilsteuerung aufweist, wobei die zweite Teilsteuerung mit der mindestens einen Diagnosespule (132) verbunden ist und eingerichtet ist, um mindestens eine Diagnoseinformation zu erzeugen.

7. Sensorsystem (110) nach dem vorhergehenden Anspruch, wobei die Rotationseigenschaft mindestens eine Information umfasst, ausgewählt aus der Gruppe bestehend aus einer Rotationsgeschwindigkeit und einer Winkelstellung des rotierenden Elements.

8. Sensorsystem (110) nach einem der beiden vorhergehenden Ansprüche, wobei die Diagnoseinformation mindestens eine Information umfasst, ausgewählt aus der Gruppe bestehend aus: einem Vorhandensein des Geberrads (128); einem Nichtvorhandensein des Geberrads (128); einer korrekten Funktion der ersten Teilsteuerung; einer korrekten Funktion der Erregerspule (116); einer korrekten Funktion der Empfangsspulen (120).

9. Sensorsystem (110) nach einem der vorhergehenden Ansprüche, wobei die Steuerung (130) eingerichtet ist, um aus dem Signal der Diagnosespule (132) auf das Vorhandensein oder Nichtvorhandensein des Geberrads (128) zu schließen.

10. Sensorsystem (110) nach einem der vorhergehenden Ansprüche, wobei die Steuerung (130) mindestens einen Gleichrichter (148) zur Gleichrichtung mindestens eines Signals der Diagnosespule (132) aufweist.

11. Sensorsystem (110) nach einem der vorhergehenden Ansprüche, wobei die Steuerung (130) mindestens einen Frequenzfilter (144) zur Filterung mindestens eines Signals der Diagnosespule (132) aufweist.

12. Sensorsystem (110) nach einem der vorhergehenden Ansprüche, wobei die Empfangsspulen (120) und/oder die mindestens eine Diagnosespule (132) jeweils Wicklungen in Form einer 8 aufweisen.

13. Sensorsystem (110) nach einem der vorhergehenden Ansprüche, wobei das Geberrad (128) im Wesentlichen Kreissegment-förmig ausgebildet ist.

14. Sensorsystem (110) nach einem der vorhergehenden Ansprüche, wobei die Projektion des Geberrads (128) in die Ebene des Schaltungsträgers (114) in mindestens einer Winkelstellung des rotierenden Elements die Diagnosespule (132) zumindest teilweise überdeckt.

15. Verfahren zur Diagnose eines um mindestens eine Rotationsachse (112) rotierenden Elements, umfassend folgende Schritte:

I. Bereitstellung mindestens eines Sensorsystems (110) nach einem der vorhergehenden Ansprüche;
II. Auswertung mindestens eines Diagnosesignals (142) der mindestens einen Diagnosespule (132), wobei bei der Auswertung mindestens eine Diagnoseinformation gewonnen wird.

**Claims**

1. Sensor system (110) for determining at least one rotation characteristic of an element rotating about at least one axis of rotation (112), comprising at least one circuit carrier (114), wherein the circuit carrier (114) carries an exciter coil (116), wherein the exciter coil (116) encloses at least one excitation region (118), wherein the circuit carrier (114) also carries at least two receiving coils (120) in the excitation region (118), wherein each of the receiving coils (120) encloses at least two non-congruent sub-regions (124, 126) within the excitation region (118) which are enclosed in opposite directions by the respective receiving coil (120), wherein the receiving coils (120) have a substantially identical geometry, wherein the receiving coils (120) are arranged rotationally relative to one another about the axis of rotation (112), wherein the sensor system (110) also has at least one encoder wheel (128) connected to the element rotating about the axis of rotation (112), wherein the encoder wheel (128) is designed asymmetrically with respect to the axis of rotation (112) in such a way that a projection of the encoder wheel (128) into a plane of the circuit carrier (114) in different angular positions of the rotating element covers different regions of the receiving coils (120), wherein the sensor system (110) also has at least one controller (130) for determining the at least one rotation characteristic from signals from the receiving coils (120),
**characterized in that**
the circuit carrier (114) also carries at least one diagnostic coil (132) outside the excitation region (118), wherein the diagnostic coil (132) encloses at least two non-congruent diagnostic regions (134, 136) which are enclosed in opposite directions by the diagnostic coil (132), and wherein the diagnostic coil (132) is connected to the controller (130).

2. Sensor system (110) according to the preceding claim, wherein the sensor system (110) has at least two diagnostic coils (132).

3. Sensor system (110) according to the preceding claim, wherein the diagnostic coils (132) have a substantially identical geometry, wherein the diagnostic coils (132) are accommodated on the circuit carrier (114) so as to be rotated relative to one another about the axis of rotation (112).

4. Sensor system (110) according to one of the two preceding claims, wherein the diagnostic coils (132) are connected in series, wherein the controller (130) is configured to evaluate a diagnostic signal (142) from the diagnostic coils (132) connected in series.

5. Sensor system (110) according to one of the preceding claims, wherein the projection of the encoder wheel (128) into the plane of the circuit carrier (114) at least partly covers the diagnostic coil (132).

6. Sensor system (110) according to one of the preceding claims, wherein the controller (130) has at least one first sub-controller, wherein the first sub-controller is connected to the receiving coils (120) and is configured to determine the at least one rotation characteristic of the rotating element, wherein the controller (130) also has at least one second sub-controller, wherein the second sub-controller is connected to the at least one diagnostic coil (132) and is configured to generate at least one item of diagnostic information.

7. Sensor system (110) according to the preceding claim, wherein the rotation characteristic comprises at least one item of information selected from the group comprising a rotational speed and an angular position of the rotating element.

8. Sensor system (110) according to one of the two preceding claims, wherein the diagnostic information comprises at least one item of information selected from the group comprising: a presence of the encoder wheel (128); an absence of the encoder wheel (128); a correct function of the first sub-controller; a correct function of the exciter coil (116); a correct function of the receiving coils (120).

9. Sensor system (110) according to one of the preceding claims, wherein the controller (130) is configured to infer the presence or absence of the encoder wheel (128) from the signal from the diagnostic coil (132).

10. Sensor system (110) according to one of the preceding claims, wherein the controller (130) has at least one rectifier (148) for rectifying at least one signal from the diagnostic coil (132).

11. Sensor system (110) according to one of the preceding claims, wherein the controller (130) has at least one frequency filter (144) for filtering at least one signal from the diagnostic coil (132).

12. Sensor system (110) according to one of the preceding claims, wherein the receiving coils (120) and/or the at least one diagnostic coil (132) each have windings in the form of a figure 8.

13. Sensor system (110) according to one of the preceding claims, wherein the encoder wheel (128) is designed substantially in the shape of a circular segment.

14. Sensor system (110) according to one of the preceding claims, wherein the projection of the encoder wheel (128) into the plane of the circuit carrier (114) in at least one angular position of the rotating element at least partly covers the diagnostic coil (132).

15. Method for diagnosing an element rotating about at least one axis of rotation (112), comprising the following steps:

I. providing at least one sensor system (110) according to one of the preceding claims;
II. evaluating at least one diagnostic signal (142) from the at least one diagnostic coil (132), wherein at least one item of diagnostic information is obtained during the evaluation.

**Revendications**

1. Système de capteur (110) permettant de déterminer au moins une caractéristique de rotation d'un élément tournant autour d'au moins un axe de rotation (112), comprenant au moins un support de circuit (114), le support de circuit (114) portant une bobine d'excitation (116), la bobine d'excitation (116) entourant au moins une zone d'excitation (118), dans lequel le support de circuit (114) porte dans la zone d'excitation (118) en outre au moins deux bobines réceptrices (120), chacune des bobines réceptrices (120) entourant à l'intérieur de la zone d'excitation (118) respectivement au moins deux zones partielles (124, 126) non coïncidentes, entourées en sens inverse par la bobine réceptrice (120) respective, dans lequel les bobines réceptrices (120) présentent une géométrie substantiellement identique, dans lequel les bobines réceptrices (120) sont disposées en étant tournées les unes par rapport aux autres autour de l'axe de rotation (112), dans lequel le système de capteur (110) présente en outre au moins une roue de capteur (128) reliée à l'élément tournant autour de l'axe de rotation (112), dans lequel la roue de capteur (128) est réalisée de manière asymétrique par rapport à l'axe de rotation (112) de telle sorte qu'une projection de la roue de capteur (128) dans un plan du support de circuit (114) dans différentes positions angulaires de l'élément rotatif recouvre différentes zones des bobines réceptrices (120), dans lequel le système de capteur (110) présente en outre au moins une commande (130) pour déterminer ladite au moins une caractéristique de rotation à partir de signaux des bobines réceptrices (120),
**caractérisé en ce que** le support de circuit (114) porte en outre au moins une bobine de diagnostic (132) en dehors de la zone d'excitation (118), dans lequel la bobine de diagnostic (132) entoure au moins deux zones de diagnostic (134, 136) non coïncidentes, entourées par la bobine de diagnostic (132) en sens inverse, et dans lequel la bobine de diagnostic (132) est reliée à la commande (130).

2. Système de capteur (110) selon la revendication précédente, dans lequel le système de capteur (110) présente au moins deux bobines de diagnostic (132).

3. Système de capteur (110) selon la revendication précédente, dans lequel les bobines de diagnostic (132) présentent une géométrie substantiellement identique, les bobines de diagnostic (132) étant reçues sur le support de circuit (114) en étant tournées les unes vers les autres autour de l'axe de rotation (112).

4. Système de capteur (110) selon l'une des deux revendications précédentes, dans lequel les bobines de diagnostic (132) sont connectées en série, dans lequel la commande (130) est conçue pour évaluer un signal de diagnostic (142) des bobines de diagnostic (132) connectées en série.

5. Système de capteur (110) selon l'une quelconque des revendications précédentes, dans lequel la projection de la roue de capteur (128) dans le plan du support de circuit (114) recouvre au moins partiellement la bobine de diagnostic (132).

6. Système de capteur (110) selon l'une quelconque des revendications précédentes, dans lequel la commande (130) présente au moins une première commande partielle, dans lequel la première commande partielle est reliée aux bobines réceptrices (120) et est conçue pour déterminer ladite au moins une caractéristique de rotation de l'élément rotatif, dans lequel la commande (130) présente en outre au moins une deuxième commande partielle, dans lequel la deuxième commande partielle est reliée à ladite au moins une bobine de diagnostic (132) et est conçue pour produire au moins une information de diagnostic.

7. Système de capteur (110) selon la revendication précédente, dans lequel la caractéristique de rotation comprend au moins une information, qui est sélectionnée dans le groupe composé d'une vitesse de rotation et d'une position angulaire de l'élément rotatif.

8. Système de capteur (110) selon l'une des deux revendications précédentes, dans lequel les informations de diagnostic comprennent au moins une information sélectionnée dans le groupe composé de : une présence de la roue de capteur (128) ; une absence de la roue de capteur (128) ; un fonctionnement correct de la première commande partielle ; un fonctionnement correct de la bobine d'excitation (116) ; un fonctionnement correct des bobines réceptrices (120).

9. Système de capteur (110) selon l'une quelconque des revendications précédentes, dans lequel la commande (130) est conçue pour conclure à la présence ou à l'absence de la roue de capteur (128) selon le signal de la bobine de diagnostic (132).

10. Système de capteur (110) selon l'une quelconque des revendications précédentes, dans lequel la commande (130) présente au moins un redresseur (148) pour redresser au moins un signal de la bobine de diagnostic (132).

11. Système de capteur (110) selon l'une quelconque des revendications précédentes, dans lequel la commande (130) présente au moins un filtre de fréquence (144) pour filtrer au moins un signal de la bobine de diagnostic (132).

**12.** Système de capteur (110) selon l'une quelconque des revendications précédentes, dans lequel les bobines réceptrices (120) et/ou ladite au moins une bobine de diagnostic (132) présentent respectivement des enroulements en forme de 8.

**13.** Système de capteur (110) selon l'une quelconque des revendications précédentes, dans lequel la roue de capteur (128) est réalisée substantiellement en forme de segment de cercle.

**14.** Système de capteur (110) selon l'une quelconque des revendications précédentes, dans lequel la projection de la roue de capteur (128) dans le plan du support de circuit (114) recouvre au moins partiellement la bobine de diagnostic (132) dans au moins une position angulaire de l'élément rotatif.

**15.** Procédé de diagnostic d'un élément tournant autour d'au moins un axe de rotation (112), comprenant les étapes suivantes consistant à :

I. fournir au moins un système de capteur (110) selon l'une quelconque des revendications précédentes ;
II. évaluer au moins un signal de diagnostic (142) de ladite au moins une bobine de diagnostic (132), dans lequel au moins une information de diagnostic est obtenue lors de l'évaluation.

EP 3 833 936 B1

FIG. 1

FIG. 2

18

FIG. 3A

FIG. 3B

FIG. 3C

**FIG. 4**

**FIG. 5**

**FIG. 6**

150

U

156

t

152

**FIG. 7**

**FIG. 8**

158

160

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013203937 A1
- DE 102016202877 B3
- EP 0056303 A2

**In der Beschreibung aufgeführte Nicht-Patentliteratur**

- Sensoren im Kraftfahrzeug. 2012, 63-74, 120-129